# EUROPÄISCHE PATENTANMELDUNG

(11) **EP 2 213 437 A1**
(43) Veröffentlichungstag der Anmeldung: **04.08.2010**
(21) Anmeldenummer: 09015456.8
(22) Anmeldetag: 15.12.2009
(51) Int. Cl.: B29C 33/50, B29C 33/02

(54) **Form für Giessverfahren**

(30) Priorität: 12.01.2009 DE 102009004694
(71) Anmelder: Roll, Andreas, 88085 Langenargen (DE)
(72) Erfinder: Roll, Andreas, 88085 Langenargen (DE)
(74) Vertreter: Lemcke, Brommer & Partner

(57) **Zusammenfassung**

Die Erfindung betrifft eine Form zum Einsatz beim Gießen eines Gussteils mit einem zu erstarrenden Medium, umfassend zumindest einen Grundkörper. Der Grundkörper ist hinsichtlich seiner räumlichen Form zumindest teilweise flexibel ausgestaltet und ist temporär in einem konturstabilen Zustand bringbar.

## Beschreibung

Die Erfindung betrifft eine Form zum Einsatz beim Gießen eines Gussteils mit einem zu erstarrenden Medium.

Um ein Gussteil herzustellen, wird üblicherweise eine Gießform verwendet, die mit einem zu erstarrenden Medium beaufschlagt wird. Durch Abkühlen erstarrt das flüssige Medium zu einem festen Gegenstand. Um dem Gussteil seine Form während des Erstarrens zu geben, ist es im Stand der Technik bekannt, Sandkerne, die mittels Klebemittel in eine definierte Form gebracht werden oder zusammengeklebte Schaumkörper (Lost-Foam-Verfahren) zu verwenden. Die Innenkonturen der Gussteile werden dabei mittels Kernen hergestellt, die Außenkonturen über verlorene Formen oder Dauerformen.

Verlorene Formen bzw. Kerne sind jeweils nur einmal einsetzbar, da die Form/der Kern nach jedem Gießvorgang zerstört werden muss, um das Gussteil aus der Form ausformen zu können. Sandformen bzw. Sandkerne werden immer dann eingesetzt, wenn die Gestaltung es erfordert, die Amortisationskosten einer Dauerform nicht gegeben sind bzw. technische Vorraussetzungen bzgl. Größe, etc. nicht umsetzbar sind.

Demgegenüber bieten Dauerformen und Dauerformkerne den Vorteil, dass diese mehrfach verwendet werden können. Nachteilig bei diesen ist, dass mit Dauerformen bzw. Dauerformkernen keine Hinterschneidungen geformt werden können, das heißt die mit Dauerformen bzw. Dauerformkernen zu formenden Gussteile unterliegen eingeschränkten Bedingungen hinsichtlich ihrer Form bzw. Geometrie.

Zwar ist es bereits im Stand der Technik bekannt, sowohl eine Außen- als auch eine Innenkontur darzustellen, beispielsweise mittels Druckgießverfahren. Hierfür müssen die Dauerformkerne allerdings beim Entformen separat bewegt werden und es muss eine aufwendige Mechanik zur Durchführung der Bewegungen dieser Dauerformkerne bereitgestellt werden. Weiter sind nicht alle Gussteile durch das Druckgießverfahren herstellbar. Nachteilig ist zudem, dass das Druckgießverfahren nur für größere Stückzahlen überhaupt wirtschaftlich sinnvoll ist, da die Kosten für ein Druckgießwerkzeug erheblich sind: Selbst bei einfachen Formen wird die Schwelle der Wirtschaftlichkeit erst bei einigen Tausend hergestellten Gussteilen erreicht.

Aufgabe der vorliegenden Erfindung ist es daher, eine einfache und kostengünstige Form zum Einsatz beim Gießen eines Gussteils und ein einfaches und kostengünstiges Gießverfahren zum Gießen von Außen- und/oder Innenkonturen von Gussteilen mit einem zu erstarrenden Medium zur Verfügung zu stellen, welche flexibler einsetzbar sind.

Diese Aufgabe wird durch die erfindungsgemäße Form zum Einsatz beim Gießen eines Gussteils mit einem zu erstarrenden Medium, umfassend zumindest einen Grundkörper zur Formgebung des Gussteils, dadurch gelöst, dass der Grundkörper hinsichtlich seiner räumlichen Form zumindest teilweise flexibel ausgestaltet ist und temporär in einen konturstabilen Zustand bringbar ist.

Anhand des hinsichtlich seiner räumlichen Form zumindest teilweise flexibel ausgestalteten Grundkörpers kann der Grundkörper in seinen äußeren Abmessungen variiert werden und erleichtert so sowohl das Einbringen der Form in ein Gießwerkzeug als auch das Entfernen der Form von dem erstarrten Gussteil. Während des Gießens wird der Grundkörper hinsichtlich seiner räumlichen Form jedoch in einen konturstabilen Zustand gebracht, so dass dem Gussteil durch die erfindungsgemäße Form die gewünschte Form/Kontur erhält.

Zweckmäßigerweise ist die Form vom Gussteil zerstörungsfrei entfernbar. Durch die zerstörungsfreie Entfernbarkeit der Form vom Gussteil wird eine erhebliche Kostenreduktion erzielt, denn die Form kann wieder beim nächsten Gießvorgang für ein bestimmtes Gussteil eingesetzt werden. Es muss daher nicht eine neue Form hergestellt werden, was zusätzliche Kosten verursachen würde.

Vorteilhafterweise umfasst der Grundkörper zumindest teilweise Textilien und/oder metallische Flächen, insbesondere schalenartige Elemente. Die Verwendung eines Grundkörpers aus Textilien ermöglicht auf einfache Weise einen kostengünstigen Grundkörper herzustellen. Gleichzeitig ist dieser auch leicht in einen konturstabilen Zustand bringbar, wenn dieser mit Mitteln zur Formstabilisierung, beispielsweise durch Druck beaufschlagt wird. Umfasst der Grundkörper metallische Flächen, so können beispielsweise auch kritische Stellen, die mittels der Textilie nur unter Qualitätseinbußen geformt werden könnten, durch die Verwendung von metallischen Flächen, insbesondere schalenartigen Elementen in gewünschter Qualität geformt werden. Dabei ist der Grundkörper im Bereich der Textilie flexibel ausgestaltet und kann wie oben beschrieben mit den Mitteln zur Formstabilisierung temporär in einen konturstabilen Zustand gebracht werden.

Besonders vorteilhaft ist dabei, wenn die Textilie Fasern umfasst, wobei die Fasern aus unterschiedlichen Fasermaterialien und/oder Faserdichten hergestellt sind. Durch Variation der Fasermaterialen und/oder Faserdichten kann auf einfache Weise die Textilie an die Eigenschaften des zu erstarrenden Mediums angepasst werden, so dass hier beispielsweise die Wärmeleitung durch bestimmte Fasermaterialien von dem zu erstarrenden Medium in optimaler Weise abgeleitet oder die thermische oder mechanische Belastbarkeit verbessert werden kann. Durch die Erhöhung der Faserdichte können die Dichtigkeit des Grundkörpers oder dessen Temperaturbeständigkeit entsprechend an die Erfordernisse für die Herstellung des Gussteils angepasst werden.

Zweckmäßigerweise umfasst die Textilie ein Gestricke und/oder ein Geflecht und/oder ein Gewebe und/oder ein Gewirke. Auch damit wird ein Höchstmaß an Flexibilität für die Form erreicht, denn durch die vorgenannten unterschiedlichen Herstellungsarten der Textilie kann diese an das zu erstarrende Medium bzw. an die räumliche Form des Gussteils in optimaler Weise angepasst werden.

Um das Erstarren des Mediums zu lenken bzw. zu steuern, ist es vorteilhaft, dass die Form in ihrem Inneren mit einem Heiz- oder Kühlmedium zur Steuerung der Abkühlung des zu erstarrenden Mediums beaufschlagbar ist. Hierzu können beispielsweise im Inneren des Grundkörpers Kanäle vorgesehen sein, durch die ein Heiz- oder Kühlmedium zum Heizen oder Kühlen des zu erstarrenden Mediums bzw. des Gussteils fließen kann.

Zweckmäßigerweise weist der Grundkörper, insbesondere die Textilie eine Beschichtung auf und/oder die Textile umfasst feuerfestes MaterialMit einer Beschichtung kann die Dichtigkeit des Grundkörpers, insbesondere der Textilie, zum einen gegenüber dem Eindringen des zu erstarrenden Mediums, zum anderen gegenüber dem Heiz- oder Kühlmedium sichergestellt werden. Gleichzeitig kann die Haftung des Grundkörpers an dem Gussteil herabgesetzt werden, um so ein einfaches Ablösen des Gussteils von dem Grundkörper bzw. der Form zu ermöglichen. Um die Beständigkeit der Form gegenüber hohen Temperaturen zu verbessern, umfasst die Textilie feuerfestes Material.

Um den Grundkörper temporär in einen konturstabilen Zustand zu bringen, ist es zweckmäßig, dass Mittel zur Formstabilisierung des Grundkörpers angeordnet sind und insbesondere pneumatische und/oder mechanische Mittel und/oder hydraulische Mittel umfassen. Als pneumatische Mittel und/oder hydraulische Mittel können beispielsweise Gase oder Flüssigkeiten dienen, die mit Druck beaufschlagt werden. Dadurch wird ein zeitweiser konturstabiler Zustand des Grundkörpers erreicht. Nach Erstarren des Mediums zu einem Gussteil wird der Druck vermindert, so dass der Grundkörper schrumpft; anschließend wird dieser vom Gussteil entfernt. Daneben ist es ebenfalls möglich, mechanische Mittel, beispielsweise in Form von Klammern, Spreizern, Excentern, etc. einzusetzen, um den Grundkörper in einen temporär konterstabilen Zustand zu bringen.

Damit der Grundkörper innerhalb der Form ortsfest während des Gießens des Gussteils verbleibt, ist es vorteilhaft, dass der Grundkörper zumindest teilweise an der Form angeordnet ist. Durch die Anordnung an der Form, beispielsweise durch eine lösbare Verbindung, kann zusätzlich auch, wenn die Verbindung entsprechend ausgebildet ist, ggfls. Heiz- oder Kühlmedium das Innere des Grundkörpers über diese Verbindung beaufschlagen und so die Temperatur des zu erstarrenden Mediums zumindest mittelbar lenken bzw. steuern.

Die Erfindung betrifft ebenfalls ein Gießverfahren zum Gießen von Außen- und/oder Innenkonturen von Gussteilen mit einem zu erstarrenden Medium und insbesondere mit einer Form gemäß einem der Ansprüche 1 bis 9. Das erfindungsgemäße Gießverfahren löst dabei die Aufgabe der vorliegenden Erfindung durch die Schritte temporäres Beaufschlagen der Form mit Mitteln zur Formstabilisierung zur Erzeugung eines temporären konturstabilen Zustandes der Form, insbesondere während des Gießens, bis zur Erstarrung des Mediums zu einem Gussteil, Beaufschlagen der Form mit dem zu erstarrenden Medium, Abkühlen und Erstarren des Mediums zu dem Gussteil, sowie Entfernen der Form von dem Gussteil. Das erfindungsgemäße Gießverfahren ermöglicht eine einfache und kostengünstige Herstellung eines oder einer Vielzahl gleicher Gussteile. Des Weiteren ermöglicht das erfindungsgemäße Gießverfahren Gussteile mit Hinterschneidungen, etc. herzustellen; Einschränkungen hinsichtlich geometrischer Randbedingungen entfallen damit. Dies erhöht wesentlich die Flexibilität des Gießverfahrens.

Vorteilhafterweise erfolgt das Beaufschlagen der räumlichen Form mit Mitteln zur Formstabilisierung entweder vor oder nach dem Beschicken eines Gießwerkzeugs mit der Form. Erfolgt das Beaufschlagen vor dem Beschicken eines Gießwerkzeugs, kann die Form vorab in einen konturstabilen Zustand gebracht werden und dann beispielsweise ohne weitere Verbindung mit den Mitteln zur Formstabilisierung in das Gießwerkzeug eingebracht werden; störende Leitungen oder Verbindungen im Gießwerkzeug sind damit nicht nötig. Wird das Beaufschlagen der Form mit den Mitteln zur Formstabilisierung nach dem Beschicken des Gießwerkzeugs mit diesen vorgenommen, kann während des Gießverfahrens eine Steuerung der Mittel zur Formstabilisierung erfolgen und damit in vorteilhafter Weise das Gießverfahren gesteuert werden. Gleichzeitig wird damit der Platzverbrauch der Form außerhalb des Gießwerkzeugs minimiert.

Um den Abkühlungsprozess des zu erstarrenden Mediums optimal steuern zu können, ist es vorteilhaft, dass die Temperatur des zu erstarrenden Mediums und/oder die Temperatur der Form und/oder die Temperatur des Gießwerkzeugs zumindest während des Abkühlens geregelt werden.

Zweckmäßigerweise wird die Temperatur durch Beaufschlagung zumindest der Form mit einem Kühlmedium geregelt. Dies ermöglicht mittelbar auch die Regelung der Temperatur des noch zu erstarrenden Gussteils, da das Gussteil mit seiner räumlichen Kontur an der Form anliegt und so teilweise ein Wärmeaustausch erfolgt.

Damit das Gießverfahren optimal einsetzbar ist, ist es vorteilhaft, dass das Gussteil aus Metallen, Kunststoffen oder Werkstoffen mit mineralischer Basis gegossen wird.

Um die Temperatur des zu erstarrenden Mediums zumindest mittelbar zu steuern, ist es zweckmäßig, dass über eine Verbindung zwischen dem Grundkörper und der Form ein Heiz- oder Kühlmedium eingeleitet wird.

Weitere Merkmale und Vorteile der Erfindung ergeben sich aus der nachfolgenden Beschreibung eines Ausführungsbeispiels anhand der Zeichnungen. Dabei zeigt
- Figur 1: eine erfindungsgemäße Form;
- Figur 2: eine erfindungsgemäße Form in einer weiteren Ausführungsform.

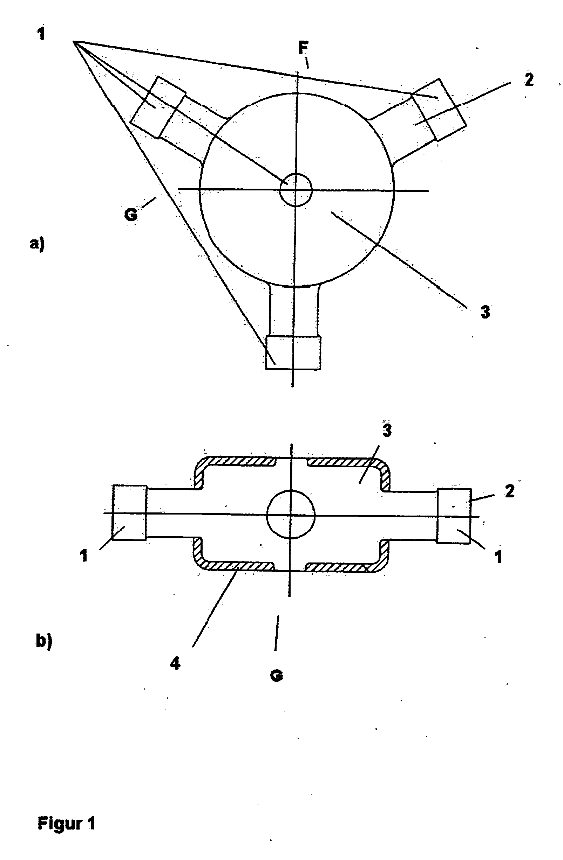

In Figur 1 ist zweidimensional eine erfindungsgemäße Form F mit einem Grundkörper 3 in einer Draufsicht gezeigt. Der Grundkörper 3 weist dabei im Wesentlichen einen kreisförmigen Querschnitt auf und ist über in radialer Richtung abstehende und über den Umfang gleich verteilte Kernlager 1 mit einer umgebenden Gießform G verbunden. Die Kernlager 1 sind dabei so ausgebildet, dass diese mit Druck beaufschlagt werden können und strömungstechnisch mit dem Grundkörper 3 in Verbindung stehen, um der erfindungsgemäßen Form F bei Druckbeaufschlagung zumindest zeitweise eine konturstabile räumliche Form zu geben.

In Figur 1b ist ein Querschnitt durch eine erfindungsgemäße Form F gemäß Figur 1 a in ihrem konturstabilen Zustand gezeigt. Umgeben ist dabei der an sich flexible aber sich temporär in einem konturstabilen Zustand befindliche Grundkörper 3 von einer Gießform G. Zwischen dem inneren Rand der Gießform G und der Außenkontur des temporär konturstabilen Grundkörpers 3 ist ein Gussteil 4 angeordnet. Das Gussteil 4 wird durch Beaufschlagen der Gießform mit dem zu erstarrenden Medium hergestellt. Als zu erstarrendes Medium können insbesondere Metalle, Kunststoffe oder Werkstoffe mit mineralischer Basis, beispielsweise Beton verwendet werden. Über Kanäle (nicht gezeigt), die in den Kernlagern 1 angeordnet sind, wird der Grundkörper 3 mit einem Kühlmedium beaufschlagt und bewirkt so ein schnelles Erstarren des Gussteils 4. Anschließend wird der Grundkörper 3 nicht mehr mit Druck beaufschlagt. Der Grundkörper 3 wird hinsichtlich seiner räumlichen Form flexibel, schrumpft somit in seiner räumlichen Ausdehnung und kann dann von dem Gussteil 4 einfach und schnell entfernt werden.

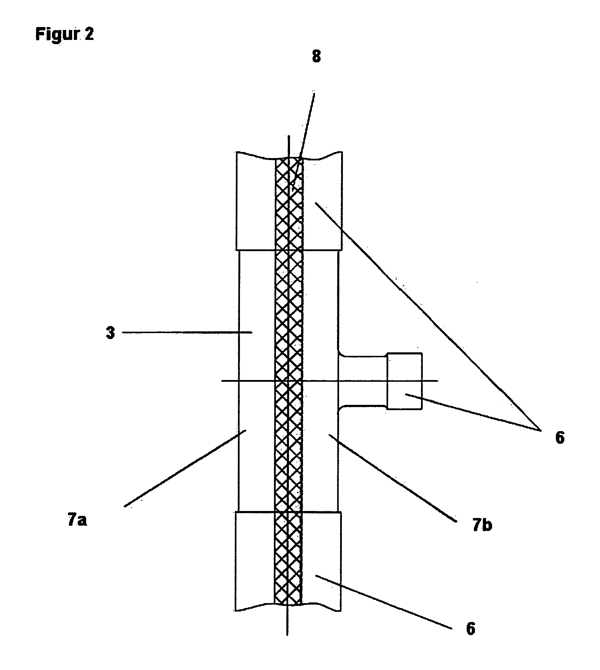

Die Figur 2 zeigt eine weitere Ausführung einer erfindungsgemäßen Form. Dabei umfasst der Grundkörper 3 der erfindungsgemäßen Form nun zwei Stahlhalbschalen 7a, 7b. Zwischen den beiden Stahlhalbschalen 7a, 7b ist zur Verbindung der beiden Halbschalen 7a, 7b aneinander jeweils auf beiden Seiten ein Streifen 8 aus Stahlgewebe angeordnet, der fluiddicht ist. Über Kernlager 6 kann nun das Innere des Grundkörpers 3 mit Druck beaufschlagt werden, so dass sich das Gewebe einen formstabilen Zustand für das Gießen des Gussteils einnimmt. Nach Beendigung des Gießvorganges, das heißt nach dem Erstarren des Mediums zu einem Gussteil, wird das Innere des Grundkörpers 3 dann nicht mehr mit Druck beaufschlagt, das Gewebe 8 verliert seinen formstabilen Zustand, das heißt, der Grundkörper 3 schrumpft insgesamt und kann dann vom Gussteil entfernt werden.

Zusammenfassend bietet die Erfindung mehrere Vorteile. Die erfindungsgemäße Form ermöglicht eine einfache und kostengünstige Herstellung einer Form für ein Gussteil. Dabei sind hinsichtlich der geometrischen Form (Hinterschneidungen, etc.) des zu gießenden Teils keine Einschränkungen zu beachten. Des Weiteren bietet die vorliegende Erfindung den Vorteil, dass die Form mehrfach wiederverwendbar ist. Dies senkt erheblich die Kosten für die Herstellung von Gussteilen.

## Patentansprüche

1. Form (F) zum Einsatz beim Gießen eines Gussteils (4) mit einem zu erstarrenden Medium, umfassend
zumindest einen Grundkörper (3) zur Formgebung des Gussteils (4),
**dadurch gekennzeichnet, dass**
der Grundkörper (3) hinsichtlich seiner räumlichen Form zumindest teilweise flexibel ausgestaltet ist
und temporär in einen konturstabilen Zustand bringbar ist.

2. Form (F) nach Anspruch 1,
**dadurch gekennzeichnet, dass**
die Form (F) zerstörungsfrei vom Gussteil (4) entfernbar ist.

3. Form nach Anspruch 1,
**dadurch gekennzeichnet, dass**
der Grundkörper (3) zumindest teilweise Textilien (8) und/oder metallische Flächen (7a, 7b), insbesondere schalenartige Elemente (7a, 7b) umfasst.

4. Form (F) nach Anspruch 3,
**dadurch gekennzeichnet, dass**
die Textilie (8) Fasern umfasst, wobei die Fasern aus unterschiedlichen Fasermaterialien und/oder Faserdichten hergestellt sind.

5. Form (F) nach zumindest einem der Ansprüche 1 bis 4,
**dadurch gekennzeichnet, dass**
die Textilie (8) ein Gestricke und/oder Geflecht und/oder Gewebe und/oder Gewirke umfasst.

6. Form (F) nach zumindest Ansprüche 1 bis 5,
**dadurch gekennzeichnet, dass**
die Form (F) mit einem Heiz- oder Kühlmedium zur Steuerung der Abkühlung des zu erstarrenden Mediums beaufschlagbar ist.

7. Form (F) nach zumindest einem der Ansprüche 1 bis 6,
**dadurch gekennzeichnet, dass**
der Grundkörper (3), insbesondere die Textilie (8), eine Beschichtung aufweist und/oder die Textilie (8) feuerfestes Material umfasst

8. Form (F) nach zumindest Anspruch 1 bis 7,
**dadurch gekennzeichnet, dass**
Mittel zur Formstabilisierung des Grundkörpers (3) angeordnet sind und insbesondere pneumatische und/oder mechanische und/oder hydraulische Mittel umfassen.

9. Form (F) nach zumindest einem der Ansprüche 1 bis 8,
**dadurch gekennzeichnet, dass**
der Grundkörper (3) zumindest teilweise an der Form (F) angeordnet ist.

10. Gießverfahren zum Gießen von Außen- und/oder Innenkonturen von Gussteilen (4) mit einem zu erstarrenden Medium, und insbesondere mit einer Form (F) gemäß einem der Ansprüche 1-9, umfassend
die Schritte
Temporäres Beaufschlagen der Form (F) mit Mitteln zur Formstabilisierung zur Erzeugung eines temporären konturstabilen Zustandes der Form insbesondere während des Gießens, bis zur Erstarrung des Mediums zu einem Gussteil (4),
Beaufschlagen der Form (F) mit einem zu erstarrenden Medium, Abkühlen und Erstarren des Mediums zu dem Gussteil (4),
Entfernen der Form (F) von dem Gussteil (4).

11. Gießverfahren nach Anspruch 10,
**dadurch gekennzeichnet, dass**
das Beaufschlagen der Form mit Mitteln zur Formstabilisierung entweder vor oder nach dem Beschicken eines Gießwerkzeugs mit der Form erfolgt.

12. Gießverfahren nach zumindest einem der Ansprüche 10 bis 11,
**dadurch gekennzeichnet, dass**
die Temperatur des zu erstarrenden Mediums und/oder die Temperatur der Form (F) und/oder die Temperatur des Gießwerkzeugs zumindest während des Abkühlens geregelt wird.

13. Gießverfahren nach zumindest einem der Ansprüche 10 bis 12,
**dadurch gekennzeichnet, dass**
die Temperatur durch Beaufschlagung zumindest der Form (F) mit einem Kühlmedium geregelt wird.

14. Gießverfahren nach zumindest einem der Ansprüche 10 bis 13,
**dadurch gekennzeichnet, dass**
das Gussteil aus Metallen, Kunststoffen oder Werkstoffen mit mineralischer Basisgegossen wird.

15. Gießverfahren nach zumindest einem der Ansprüche 11 bis 14,
**dadurch gekennzeichnet, dass**
über eine Verbindung zwischen dem Grundkörper (3) und Form (F) ein Heiz- oder Kühlmedium zur zumindest mittelbaren Steuerung der Temperatur des zu erstarrenden Mediums eingeleitet wird.
